Europäisches Patentamt

European Patent Office

Office européen des brevets

(19)

(11) Numéro de publication: **0 329 560**
**A1**

(12) # DEMANDE DE BREVET EUROPEEN

(21) Numéro de dépôt: 89400442.3

(22) Date de dépôt: 17.02.89

(51) Int. Cl.⁴: **C 23 F 11/06**
C 23 F 11/18, C 09 K 5/04

(30) Priorité: 18.02.88 FR 8801935

(43) Date de publication de la demande:
23.08.89 Bulletin 89/34

(84) Etats contractants désignés:
AT BE CH DE ES GB GR IT LI LU NL SE

(71) Demandeur: **GAZ DE FRANCE**
**23, rue Philibert Delorme**
**F-75017 Paris (FR)**

(72) Inventeur: **Bressan, Joelle**
**145, Avenue Jean-Jaurès**
**F-93110 Rosny Sous Bois (FR)**

**Mezon, Jacques**
**65, Rue Soeur Angèle**
**F-95210 Saint Gratien (FR)**

(74) Mandataire: **Le Roux, Martine et al**
**Cabinet Beau de Loménie 55, rue d'Amsterdam**
**F-75008 Paris (FR)**

Revendications pour l'Etat contractant suivant: ES.

(54) Inhibiteurs de corrosion des aciers et compositions aqueuses d'halogénure de métal alcalin les contenant.

(57) La présente invention a pour objet des inhibiteurs de corrosion des aciers, notamment des aciers au carbone ou faiblement alliés. Il s'agit de mélanges ternaires à action synergétique contenant au moins une base forte, au moins un molybdate et au moins un phosphate. Elle a également pour objet des compositions aqueuses d'halogénure de métal alcalin contenant lesdits inhibiteurs. De telles compositions sont avantageusement utilisées comme fluide de travail dans des dispositifs de pompe à chaleur à absorption haute température.

EP 0 329 560 A1

**Description**

**Inhibiteurs de corrosion des aciers et compositions aqueuses d'halogénure de métal alcalin les contenant.**

La présente invention a pour objet des inhibiteurs de corrosion des aciers et les compositions aqueuses d'halogénure de métal alcalin les contenant.

Elle concerne, plus particulièrement, des inhibiteurs de corrosion des aciers, en contact, en milieu anaérobie, avec des compositions aqueuses d'halogénures de métal alcalin et leur utilisation dans lesdites compositions.

Ces compositions aqueuses d'halogénure de métal alcalin sont du type de celles intervenant comme fluide de travail dans des dispositifs de pompe à chaleur à absorption haute température. L'incorporation des inhibiteurs de corrosion, selon l'invention, en leur sein leur confère des effets d'inhibition de la corrosion des surfaces métalliques internes desdits dispositifs.

Selon l'invention, on propose donc une solution au problème de la corrosion des aciers en contact, à haute température, avec des solutions aqueuses d'halogénure de métal alcalin concentrées.

Les inhibiteurs de corrosion selon l'invention interviennent efficacement avec des aciers au carbone ou faiblement alliés, de même qu'avec des aciers plus fortement alliés (aciers inoxydables, aciers au Ni....).

Traditionnellement réservées à des applications à basses températures, telles que la réfrigération et le conditionnement d'air, les pompes à chaleur à absorption offrent, à l'heure actuelle des opportunités nouvelles en matière de revalorisation de l'énergie dans l'industrie. Elles permettent le transfert de chaleur d'un bas niveau thermique (50-80°C) à un niveau supérieur (100 à 150°C).

Les mélanges eau-halogénure de métal alcalin et, plus particulièrement, les mélanges eau-bromure de lithium, couramment utilisés dans les systèmes de réfrigération à absorption classiques, sont tout à fait compatibles avec ces hautes températures de transfert, pourvu qu'ils soient mis en oeuvre à forte concentration en poids de sel (de l'ordre de 60 à 70%) et à des températures de travail qui peuvent atteindre 220°C. Dans ces conditions d'utilisation, lesdits mélanges sont très agressifs vis-à-vis des matériaux métalliques du système et la prévention de la corrosion, devenant un objectif technologique prioritaire, requiert le recours à des solutions nouvelles que ne peuvent apporter les connaissances de l'art antérieur.

En effet, dans les machines à absorption traditionnelles, les mélanges eau-bromure de lithium n'opèrent pas à des températures supérieures à 160°C et leur concentration en sel n'est pas supérieure à 60%. Les risques de corrosion des matériaux métalliques, en contact avec de tels mélanges, sont limités par l'usage d'inhibiteurs de corrosion, tels que le chromate de lithium; les molybdates, nitrates ou nitrites de métaux alcalins, et notamment de lithium; le benzotriazole et ses dérivés; le trioxyde d'antimoine; et certains de leurs mélanges... Ces mélanges aqueux et les inhibiteurs de corrosion qu'ils contiennent, ainsi que des dispositifs les employant comme fluide de travail, sont connus et notamment décrits dans les brevets US 2 755 170 et 3 218 259, dans les brevets JP 52-97460, JP 53-25288 et JP 58-224187.

Lesdits inhibiteurs de corrosion, selon l'art antérieur, présentent parfois, à plus haute température, des inconvénients qui en interdisent ou limitent l'utilisation. Ainsi, les polyalcools ne sont plus stables; les chromates, nitrates, nitrites et molybdates se consomment rapidement et entraînent une aggravation de la corrosion localisée. Les autres inhibiteurs, qui seraient utilisables dans ces conditions plus sévères - température voisine de 220°C et concentration en sel de l'ordre de 70%- se sont révélés d'une efficacité moindre.

Selon l'invention, on propose donc de nouveaux inhibiteurs de corrosion, efficaces en atmosphère désaérée pour inhiber la corrosion des aciers, notamment la corrosion des aciers au carbone ou faiblement alliés - aciers qui constituent le meilleur compromis technico-économique pour une utilisation dans les pompes à chaleur à absorption à haute température -en contact avec des compositions aqueuses d'halogénures de métal alcalin contenant jusqu'à 70% en poids dudit halogénure de métal alcalin. Lesdits inhibiteurs selon l'invention sont efficaces dans ces conditions sévères et notamment jusqu'à des températures de l'ordre de 220°C.

Il s'agit de mélanges ternaires, à action synergétique dont les trois constituants sont au moins une base forte, au moins un molybdate et au moins un phosphate.

Selon l'invention, on a mis en évidence un effet de synergie propre à ce mélange spécifique des trois constituants et, plus particulièrement à l'association phosphate(s)-molybdate(s).

Ledit mélange peut contenir une ou plusieurs base(s) forte(s), un ou plusieurs phosphate(s) en association avec un ou plusieurs molybdate(s). Généralement, il contient une base forte, un molybdate et un phosphate.

La base forte ou le mélange de bases fortes permet de minimiser l'agressivité des mélanges eau-halogénure de métal alcalin, en lui conférant un caractère légèrement basique. Lesdites bases fortes sont avantageusement choisies parmi la soude, la potasse ou la lithine (hydroxyde de lithium). Préférentiellement, on utilise la lithine. Quel que soit l'inhibiteur considéré, la présence de base forte a toujours un effet favorable. Toutefois, en l'absence d'autres inhibiteurs, le taux d'inhibition atteint avec lesdites bases fortes est insuffisant. Les phosphate(s) et molybdate(s) sont choisis parmi les phosphates et molybdates compatibles, non réactifs, avec les compositions aqueuses d'halogénure de métal alcalin, dans lesquelles ils sont, selon l'invention, appelés à intervenir. On les choisit généralement parmi les phosphates et molybdates des métaux alcalins, des alcalino-terreux, du silicium et, plus particulièrement, parmi les phosphates et molybdates de lithium, de sodium, de calcium et de magnésium.

Un mélange ternaire, inhibiteur de corrosion selon l'invention, est avantageusement un mélange de lithine, de molybdate de lithium et/ou de sodium, de phosphate de lithium et/ou de sodium.

Les mélanges ternaires selon l'invention, caractérisés par la nature de leurs constituants, permettent la préparation de solutions aqueuses d'halogénures de métal alcalin, contenant jusqu'à 70% en poids dudit halogénure de métal alcalin et possédant, jusqu'à 220°C, des propriétés inhibitrice satisfaisantes de la corrosion. Ceci est d'autant plus surprenant que, comme précisé ci-dessus, les inconvénients à utiliser des molybdates à haute température étaient connus.

Un autre objet de la présente invention consiste en lesdites compositions aqueuses contenant une quantité efficace desdits mélanges ternaires.

C'est dans leur utilisation, au-delà d'une certaine concentration, au sein de ces compositions, que l'intérêt des mélanges ternaires selon l'invention a été mis en évidence, de façon surprenante. Lesdites compositions aqueuses peuvent être concentrées et contenir jusqu'à 70% en poids dudit halogénure de métal alcalin. Elles contiennent généralement de 40 à 70% en poids de celui-ci.

Le lithium est généralement utilisé comme métal alcalin. Avantageusement, les compositions aqueuses selon l'invention sont des compositions aqueuses de bromure de lithium.

De telles compositions sont couramment utilisées, comme précisé ci-dessus, dans les dispositifs de pompe à chaleur à absorption.

Elles contiennent selon l'invention, à titre d'agent inhibiteur de corrosion, une quantité efficace d'un mélange ternaire, caractérisé ci-dessus.

Elles contiennent de 0,01 à 0,2 mole/l de base forte.

Dans des conditions sévères d'utilisation - température voisine de 220°C et forte teneur en sel, voisine de 70% - elles contiennent avantageusement de 0,1 à 0,2 mole/l de base forte.

Cette base forte ou le mélange de bases fortes doit intervenir en quantité suffisante pour l'obtention du résultat recherché, quant à l'alcalinité de la composition, mais en quantité limitée. Des compositions trop basiques sont aussi agressives. Comme précisé ci-dessus, en l'absence d'autre inhibiteur de corrosion, le taux d'inhibition atteint avec les bases fortes est insuffisant.

Selon l'invention, on associe à ladite ou lesdites base(s) forte(s) au moins un molybdate et au moins un phosphate. On a mis en évidence l'intérêt qu'il y avait à utiliser conjointement ces produits.

Ils interviennent en une quantité suffisante pour être efficaces le plus longtemps possible, généralement à une concentration comprise entre 0,001 mole/l et 0,2 mole/l.

La borne supérieure de cette gamme de concentration n'est pas critique. Toutefois il convient que les quantités de sels employées soient solubles dans les compositions selon l'invention.

Les compositions aqueuses d'halogénure de métal alcalin selon l'invention contiennent donc de 0,01 à 0,2 mole/l de base forte, de 0,001 à 0,2 mole/l de molybdate(s) et de 0,001 à 0,2 mole/l de phosphate(s).

Comme indiqué ci-dessus, les compositions selon l'invention peuvent contenir une ou plusieurs bases fortes, un ou plusieurs molybdates en association avec un ou plusieurs phosphates. La nature des cations associés aux anions $PO_4^{\equiv}$ et $MoO_4^{\equiv}$ a également été précisée ci-dessus.

A titre illustratif, on indiquera que des compositions selon l'invention - par exemple une solution aqueuse à 70% en poids de bromure de lithium - contiennent à titre d'agent inhibiteur de corrosion, particulièrement performant :
- 0,2 mole/l de lithine ;
- du molybdate de lithium et/ou de sodium;
- du phosphate de lithium et/ou de sodium;
les teneurs en poids desdits molybdate(s) et phosphate(s) étant chacune comprise entre 0,2 et 10%.

Les mélanges ternaires d'inhibiteurs selon l'invention sont particulièrement efficaces, comme cela ressort du tableau présenté ci-après.

Ils permettent l'utilisation de compositions aqueuses concentrées en halogénure de métal alcalin, dans des conditions sévères de température. Leur efficacité a été testée dans des dispositifs de pompe à chaleur à absorption haute température, et notamment dans les zones plus sensibles de ceux-ci : au niveau des soudures, des zones courbées...

Les avantages des mélanges et compositions selon l'invention seront mieux compris à la lecture des résultats d'essais présentés ci-après.

L'efficacité et la stabilité thermique d'un mélange ternaire d'agents inhibiteurs de corrosion selon l'invention ont été contrôlées.

Des essais de corrosion de longue durée ont été effectués dans des autoclaves en acier, renfermant une cellule de verre de 1 litre de volume utile, maintenus à une pression de 10 bars d'argon. Pour chaque essai, on utilise trois échantillons métalliques (de dimensions 37 mm x 15 mm x 3 mm). Ces échantillons sont suspendus à l'aide d'une tige de verre en semi-immersion, en immersion totale dans des solutions inhibées selon l'invention contenant 70% en poids de LiBr et maintenues à 220°C, ou au-dessus desdites solutions. Des entretoises également en verre assurent la séparation desdits échantillons.

Des résultats positifs quant à l'efficacité des mélanges ternaires selon l'invention ont été obtenus dans les trois cas de figure : immersion totale - semi-immersion - phase vapeur.

On a également obtenu des résultats positifs en effectuant des essais de corrosion sous contrainte.

Le tableau I ci-après présente les résultats obtenus au cours d'essais de corrosion généralisée.

TABLEAU I

Résultats des essais de corrosion généralisée d'un acier faiblement allié dans un mélange $H_2O$-LiBr (70% en poids) à T = 220°C et p = 10 atm.

| Inhibiteurs (% en poids) | LiOH (% en poids) | Durée de l'essai (h) | Perte en poids à l'issu de l'essai ($mg/dm^2$) | Vitesse de corrosion ($mg/dm^2.j$) |
|---|---|---|---|---|
| Sans inhibiteur | 0 | 4 500 | 180 000 | 960[*] |
| Solution basique | 0,2 | 4 500 | 22 500 | 120[*] |
| Benzotriazole 0,4 | 0,2 | 4 500 | 970 | 5 |
| $Li_2MoO_4$    0,2 | 0,2 | 4 500 | 600 | 3,2 |
| $Li_2MoO_4$    10 | 0,2 | 4 500 | 150 | 0,8 |
| $Li_3PO_4$    0,2 | 0,2 | 4 500 | 560 | 3 |

EP 0 329 560 A1

TABLEAU I (suite)

| | | | | |
|---|---|---|---|---|
| $Li_2MoO_4$ 0,2<br>$Li_3PO_4$ 0,2 | 0,2 | 5 000 | 140 | 0,7 |
| $Li_2MoO_4$ 10<br>$Li_3PO_4$ 10 | 0,01 | 5 000 | 138 | 0,67 |
| $Na_2MoO_4$ 0,2<br>$Li_3PO_4$ 0,2 | 0,2 | 5 000 | 90 | 0,4 |
| $Na_2MoO_4$ 0,2<br>$Na_3PO_4$ 0,2 | 0,2 | 5 000 | 88 | 0,4 |
| $Li_2MoO_4$ 0,2<br>$Na_3PO_4$ 0,2 | 0,2 | 5 000 | 92 | 0,4 |
| $K_2MoO_4$ 0,2<br>$K_3PO_4$ 0,2 | 0,2 | 5 000 | 149 | 0,8 |
| $CaMoO_4$ 0,2<br>$Ca_3(PO_4)_2$ 0,2 | 0,2 | 5 000 | 100 | 0,5 |
| $K_2MoO_4$ 0,2<br>$Li_3PO_4$ 0,2 | 0,2 | 5 000 | 93 | 0,4 |
| $Li_2MoO_4$ 0,2<br>$Ca_3(PO_4)_2$ 0,2 | 0,2 | 5 000 | 95 | 0,45 |

\* On a observé au cours de ces essais des piqûres, des trous dans les échantillons métalliques.

La comparaison des différents résultats de ces essais de corrosion permet d'évaluer le pouvoir anti-corrosion synergétique des mélanges ternaires selon l'invention par rapport à celui d'un agent anti-corrosion selon l'art antérieur (benzotriazole), par rapport à celui de chacun de ses constituants : LiOH, un molybdate, un phosphate.

Ces résultats montrent notamment que 0,4% d'un mélange molybdate-phosphate est aussi, voire plus, efficace que 10% de molybdate seul.

**Revendications**

1. A titre d'agent inhibiteur de corrosion des aciers, en contact avec des compositions aqueuses d'halogénure de métal alcalin, les mélanges ternaires, à action synergétique, contenant au moins une base forte, au moins un molybdate et au moins un phosphate.

2. Mélanges ternaires selon la revendication 1, caractérisés en ce qu'ils contiennent de la lithine.

3. Mélanges ternaires selon l'une des revendications 1 ou 2, caractérisés en ce que les phosphate(s) et molybdate(s) sont choisis parmi les phosphates et molybdates des métaux alcalins, des alcalino-terreux, du silicium.

5

EP 0 329 560 A1

4. Mélanges ternaires selon la revendication 3, caractérisés en ce que les phosphate(s) et molybdate(s) sont choisis parmi les phosphates et molybdates de lithium, de sodium, de potassium, de calcium et de magnésium.

5. Mélanges ternaires selon l'une quelconque des revendications 1 à 4, caractérisés en ce qu'ils contiennent de la lithine, du molybdate de lithium et/ou de sodium, et du phosphate de lithium et/ou de sodium.

6. Compositions aqueuses d'halogénure de métal alcalin, utiles notamment comme fluide de travail dans des dispositifs de pompe à chaleur à absorption haute température, caractérisées en ce qu'elles contiennent, à titre d'agent inhibiteur de corrosion, une quantité efficace d'un mélange ternaire selon l'une quelconque des revendications 1 à 5.

7. Compositions selon la revendication 6, caractérisées en ce qu'elles contiennent de 40 à 70 en poids de l'halogénure de métal alcalin.

8. Compositions selon l'une des revendications 6 ou 7, caractérisées en ce que ledit halogénure de métal alcalin est du bromure de lithium.

9. Compositions selon l'une quelconque des revendications 6 à 8, caractérisées en ce qu'elles contiennent 0,01 à 0,2 mole/l de base(s) forte(s), 0,001 à 0,2 mole/l de molybdate(s) et 0,001 à 0,2 mole/l de phosphate(s).

10. Compositions selon la revendication 9, caractérisées en ce qu'elles contiennent 0,1 à 0,2 mole/l de base(s) forte(s).

11. Compositions selon l'une quelconque des revendications 6 à 10, caractérisées en ce qu'elles contiennent 0,2 mole/l de lithine, du molybdate de lithium et/ou de sodium et du phosphate de lithium et/ou de sodium, les teneurs en poids desdits molybdate(s) et phosphate(s) étant chacune comprise entre 0,2 et 10 %.

## Revendications pour l'Etat contractant suivant: ES

1. Compositions inhibitrices de la corrosion des aciers, en contact avec des compositions aqueuses d'halogénure de métal alcalin, utiles notamment comme fluide de travail dans des dispositifs de pompe à chaleur à absorption haute température, lesdites compositions étant caractérisées en ce qu'elles consistent en des mélanges ternaires d'au moins une base forte, d'au moins un molybdate et d'au moins un phosphate.

2. Compositions selon la revendication 1, caractérisées en ce qu'elles contiennent de la lithine.

3. Compositions selon l'une des revendications 1 ou 2, caractérisées en ce que les phosphate(s) et molybdate(s) sont choisis parmi les phosphates et molybdates des métaux alcalins, des alcalino-terreux, du silicium.

4. Compositions selon la revendication 3, caractérisées en ce que les phosphate(s) et molybdate(s) sont choisis parmi les phosphates et molybdates de lithium, de sodium, de potassium, de calcium et de magnésium.

5. Compositions selon l'une quelconque des revendications 1 à 4, caractérisées en ce qu'elles contiennent de la lithine, du molybdate de lithium et/ou de sodium, et du phosphate de lithium et/ou de sodium.

6. Compositions aqueuses d'halogénure de métal alcalin, utiles notamment comme fluide de travail dans des dispositifs de pompe à chaleur à absorption haute température, caractérisées en ce qu'elles contiennent ledit halogénure de métal alcalin et une quantité efficace d'une composition inhibitrice de la corrosion des aciers selon l'une quelconque des revendications 1 à 5.

7. Compositions selon la revendication 6, caractérisées en ce qu'elles contiennent de 40 à 70 % en poids de l'halogénure de métal alcalin.

8. Compositions selon l'une des revendications 6 ou 7, caractérisées en ce que ledit halogénure de métal alcalin est du bromure de lithium.

9. Compositions selon l'une quelconque des revendications 6 à 8, caractérisées en ce qu'elles contiennent 0,01 à 0,2 mole/l de base(s) forte(s), -de préférence 0,1 à 0,2 mole/l de base(s) forte(s)-, 0,001 à 0,2 mole/l de molybdate(s) et 0,001 à 0,2 mole/l de phosphate(s).

10. Compositions selon l'une quelconque des revendications 6 à 9, caractérisées en ce qu'elles contiennent 0,2 mole/l de lithine, du molybdate de lithium et/ou de sodium et du phosphate de lithium et/ou de sodium, les teneurs en poids desdits molybdate(s) et phosphate(s) étant chacune comprise entre 0,2 et 10 %.

11. Compositions aqueuses d'halogénure de métal alcalin, utiles notamment comme fluide de travail dans des dispositifs de pompe à chaleur à absorption haute température, caractérisées en ce qu'elles contiennent :

- de 40 à 70 % en poids dudit halogénure de métal alcalin ;

- et 0,01 à 0,2 mole/l de base(s) forte(s) ; 0,001 à 0,2 mole/l de molybdate(s) et 0,001 à 0,2 mole/l de phosphate(s) ;

ledit mélange ternaire à action synergétique -base(s) forte(s), molybdate(s), phosphate(s)-intervenant comme inhibiteur de corrosion des aciers.

6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | PATENT ABSTRACTS OF JAPAN, vol. 8, no. 71 (C-217)[1508], 3 avril 1984, page 105 C 217; & JP-A-58 224 187 (SHOWA DENKO K.K.) 26-12-1983 * Résumé * | 1-11 | C 23 F 11/06 C 23 F 11/18 C 09 K 5/04 |
| Y | CHEMICAL ABSTRACTS, vol. 94, no. 10, mars 1981, page 245, résumé no. 69499c, Columbus, Ohio, US; H.P. BATROFF et al.: "Inhibition of pitting corrosion by heteropoly acids", & ANN. UNIV. FERRARA, SEZ. 5 SUPPL. 1980, 7(VOL. 4, EUR. SYMP. CORROS. INHIBITORS, 5TH), 1103-10 * Résumé * | 1-11 | |
| A | CHEMICAL ABSTRACTS, vol. 104, no. 2, janvier 1986, page 225, résumé no. 9313c, Columbus, Ohio, US; M. ITOH et al.: "Corrosion inhibition of carbon steel and cupronickel by lithium molybdate in concentrated lithium bromide solution at elevated temperatures", & BOSHOKU GIJUTSU 1984, 33(9), 504-8 | | |
| A | PATENT ABSTRACTS OF JAPAN, vol. 8, no. 205 (C-243)[1642], 19 septembre 1984, page 70 C 243; & JP-A-59 93 778 (SANYO DENKI K.K.) 30-05-1984 | | |

**DOMAINES TECHNIQUES RECHERCHES (Int. Cl.4)**

C 23 F 11/00
C 09 K 5/00

Le présent rapport a été établi pour toutes les revendications

| Lieu de la recherche | Date d'achèvement de la recherche | Examinateur |
|---|---|---|
| LA HAYE | 30-05-1989 | TORFS F.M.G. |

EPO FORM 1503 03.82 (P0402)